# EUROPEAN PATENT SPECIFICATION

(11) **EP 2 420 532 B1**
(45) Date of publication and mention of the grant of the patent: **10.07.2013**
(21) Application number: 10173161.0
(22) Date of filing: 18.08.2010
(51) Int. Cl.: C08J 3/24, C08J 9/00, C08J 9/06, H01B 7/295, C08J 9/14

(54) **Self hardening flexible insulation material showing excellent temperature and flame resistance**
Selbsthärtendes flexibles Isoliermaterial mit ausgezeichneter Wärme- und Flammenbeständigkeit
Matériau d'isolation souple auto-durcissant démontrant une excellente résistance à la température et aux flammes

(43) Date of publication of application: 22.02.2012
(73) Proprietor: Armacell Enterprise GmbH, 48153 Münster (DE)
(72) Inventor: Weidinger, Jürgen, 48167, Münster (DE); Zauner, Christoph, 48147, Münster (DE)
(74) Representative: von Füner, Nicolai

(56) References cited:
- EP-A1- 1 136 529
- EP-A1- 1 298 161
- DE-A1- 19 811 484
- JP-A- 2006 087 819

## Description

The present invention relates to a thermal and/or sound insulation system or material with resistance to elevated temperatures (>300 °C) due to a controlled self-ceramifying/self-glassing/self-hardening effect which also leads to low or non-combustibility, the process for manufacturing of such system or material and the use of such system or material.

High temperature insulation systems, as e.g. in industrial application such as steam or fluid pipes or tanks reaching 400 °C and more are exclusively consisting of mainly inorganic materials, such as glass or mineral fibre like Isover® or Rockwool®, foamed glass like Foamglas®, silica (e.g. in vacuum panels), silica gels like Aerogel®, and metal and ceramic fibres and foams in some cases (e.g. Fiberfrax Durablanket®, Cellaris Lite-Cells®).
Organic insulation materials (i.e. foams) like PIR/PUR (e.g. Puren®), thermosets, such as melamine (e.g. Basotec®) etc. will reach their performance limit at significantly lower temperatures as decomposition of organic polymers of all kinds takes place in a range between 100 and 350 °C and most organic materials even will show their flashpoint at 400-450 °C, means, those so-called "rigid" organic insulations are not the material of choice. For the same reason more flexible organic insulation materials like elastomeric (e.g. EPDM, NBR) or polyolefinic foams (like PE, PP) have never even been thought about for a.m. purpose as they even would decompose (i.e. melt/soften or stiffen/get brittle) earlier and easier in comparison with a.m. thermosets or crosslinked materials, and as they are not sufficiently flame resistant.
However, a basic disadvantage of all inorganic insulation materials is their lack of easy mounting and demounting properties; they exhibit limits both when it comes to efficiently insulating bows, flanges etc., and of course they can scarcely be offered as pre-insulation. Furthermore fibrous materials have a high gas and water vapour transmission as they are naturally open porous or open cell. This can e.g. cause condensation on the pipes which leads to corrosion. Foamed glass is very brittle in comparison with fibrous materials and therefore the installation is quite elaborate and expensive. Due to this, foamed glass does not withstand vibrations and expansion/contraction cycles that usually appear in the respective installations and pipework due to internal and environmental temperature change etc., limiting its fields of applications and reliability. Ceramic and metal fibres and foams are both brittle and costly, and show the same mounting deficiencies. Metal foams and some ceramics furthermore are too good heat transmitters and therefore are not recommended for insulation purposes.

A major object of the present invention thus is to provide an insulation system or material not showing the above mentioned deficiencies, but exhibiting good mounting properties through flexibility. A further aim is to achieve a good resistance versus thermal load through controlled subsequent hardening by self-glassing or self-ceramification (in general: self-rigidification). This eventually leads to a stable rigid foam insulation which shows a very low content of combustibles.

Surprisingly, it is found that such system or material not showing the above mentioned disadvantages can be obtained by using organic polymer blends comprising specially tailored filler/additive compositions to ensure sufficient self-rigidification at typical application temperatures being faster than the expected degradation and/or hampering and/or overcompensating said degradation.

In the drawings, which form a part of this specification,

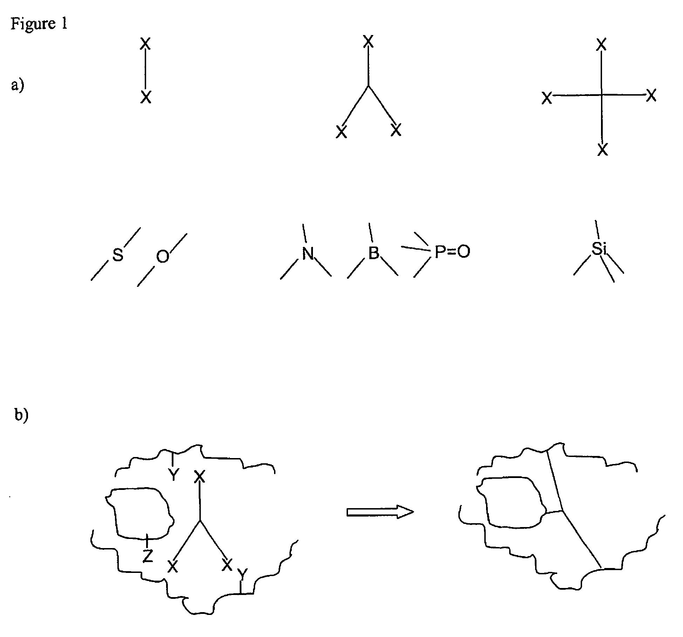

Fig. 1 a) are examples of secondary crosslinkers; wherein X is a functional reactive group;
Fig 1 b) is an example of the secondary crosslinking system, wherein X, Y, and Z are functional (reactive) groups for subsequent crosslinking: X of the crosslinker, Y of the polymer, and Z of the filler;
Fig. 2 is a schematic drawing of the claimed thermal and/or sound insulation material; and
Fig. 3 is a chart of the hardness over time for controlled self hardening versus uncontrolled hardening.

The claimed material comprises at least one layer (A), which consists of an expanded, vulcanized organic polymer based blend. The polymer based blend comprises at least one organic polymer which may be chosen from the classes of thermoplasts, thermoplastic elastomers, elastomers, thermosets or any mixtures thereof, and it may comprise homo-, co- or terpolymers or any mixtures thereof. Preferred are organic polymers chosen from elastomers or thermoplastic elastomers or some resins due to the provided flexibility. The claimed material comprises polymers of said nature with potential to form additional bonds and/or crosslinking at elevated temperatures, i.e. either having hetero atoms in the polymer backbone and/or side groups or reactive sites, such as polysiloxanes, e.g. MQ, EPM/EPDM, CR, CM, CSM, NBR, SBR, PVC, EVA, polyesters, polyacetates and the like, and any mixtures thereof.

The polymer based blend furthermore comprises at least one filler forming stable bonds and/or supporting crosslinking reactions at temperatures above 280 °C, i.e. with chemical reaction potential at a temperature higher than 280°C and which may be chosen from the classes of carbon blacks, metal/half metal/non metal oxides and/or hydroxides, halogenides, silica or silicates, phosphates or phosphites, sulphates or sulphites or sulphides, nitrates or nitrites or nitrides, borates etc., and any mixtures thereof, such as, but not exclusively, aluminium oxides/hydroxides, silicates, clay, gypsum and/or cement based systems, calcium phosphate, sodium sulphate etc.

The polymer based blend also comprises an expansion system based on physical (e.g. gases, volatile liquids) and/or chemical (e.g. forming gases and/or vapour by decomposition) expansion agents.

The polymer based blend also may comprise at least one (primary) crosslinking system for vulcanisation at low to medium temperatures as used in the industry, such as sulphur or peroxide or metal oxide or bisphenol or metal catalyst based crosslinkers together with their respective accelerators, retarders, synergists etc. Primary crosslinking can also be achieved by radiation, optionally through support by internal activators.

The polymer based blend furthermore comprises at least one secondary crosslinking system not participating at possible vulcanisation reactions of the polymers itself, but providing chemical reactivity at elevated temperatures, i.e. leading to a subsequent crosslinking during heat loading, i.e. a permanent exposition to temperatures higher than 280°C, and wherein that crosslinker is chemically active at a temperature higher than 280°C, thus leading to subsequent crosslinking. The secondary crosslinking system may comprise one or more compounds chosen from the classes of initiators (e.g. high decomposition temperature peroxides, such as BaO₂), bifunctional crosslinkers (e.g. sulphides glycol), trifunctional crosslinkers (e.g. borates, phosphates, phosphorous modifications, phosphorous compounds or nitrogen compounds, such as nitrides or nitrates) or tetrafunctional crosslinkers (e.g. silicon based compounds), multifunctional crosslinkers (e.g. polyols, sugars) or any mixtures thereof (see Figure 1a). Preferred are tri- and tetrafunctional crosslinkers as they will form more stable ceramic-like structures more rapidly. This crosslinking system for elevated temperatures (i.e. significantly above the vulcanisation temperature, means ranging from 300-600 °C) will not be changed or touched during the manufacturing of the expanded polymer blend (mixing, giving shape, vulcanising), but will interfere with active sites on polymers and/or fillers at said high temperatures. It has been found that downstream crosslinking by the secondary crosslinking system is most fast and complete if it is based to more than 50% on condensation and/or polycondensation reaction mechanisms releasing low molecular substances (small molecules) and wherein such low molecular substances are of the general formula HX, wherein X is -OH, halogen, -OR, or -OOR (where R is any organic or inorganic substituent) and/or MX, wherein M is a metal or half metal, e.g. halides -including salts-, water, OH-substituted compounds, such as MeOH, EtOH, silanols, acids etc. This is finally leading to a three-dimensional high crosslinking density network with properties comparable to foamed ceramic or foamed glass.

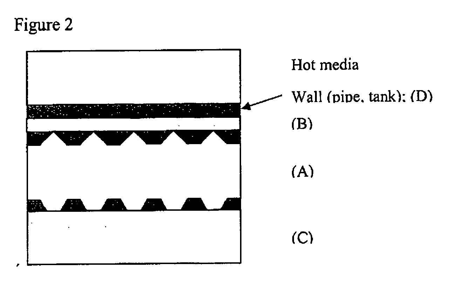

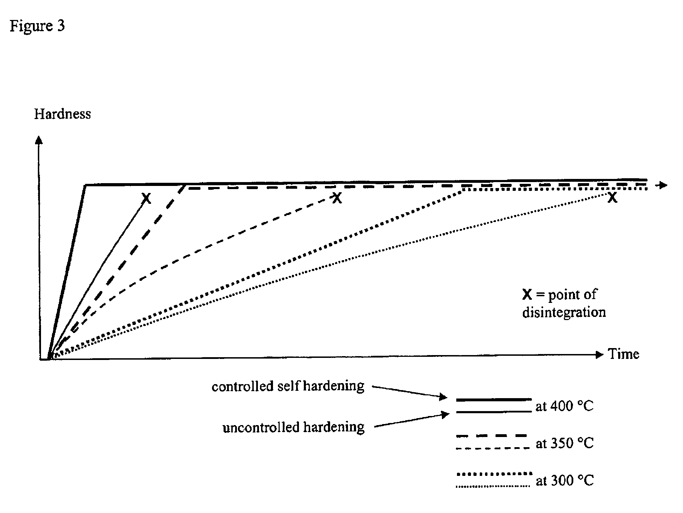

The polymer based blend furthermore may comprise additional additives participating in heat induced downstream crosslinking to accelerate the desired crosslinking reactions, such as moisture scavengers (e.g. anhydrides, hygroscopic compounds), halogen absorbers (e.g. alkali), acid or alkali neutralizers, pH buffering systems and the like. These accelerators are mainly intended to shift the equilibrium of condensation reactions to the right side (see also equations (1') and (2')) and to prevent undesired side or consecutive reactions.
The polymer based blend furthermore may comprise a heat and/or reversion stabilizer system. The stabilizers can be chosen from the classes of carbon blacks, metal oxides (e.g. iron oxide) and hydroxides (e.g. magnesium hydroxide), metal organic complexes, radical scavengers (e.g. tocopherol derivates), complex silicates (e.g. perlite, vermiculite) and combinations thereof. The stabilizing system has to prevent that (uncontrolled) premature hardening of the polymer blend would take place before ceramification (see fig. 3) and to stabilize the material when used at medium temperatures, e.g. during the start up phase of a hot pipe system. However, as some too inert bonds of the polymers and/or fillers (like e.g. Si-O, B-N) in some cases need to be activated to participate in the subsequent downstream crosslinking right in time it can be opportune to even accelerate said reversion or cleavage. Therefore, the polymer based blend may also comprise acid or alkali compounds to ensure and to trigger this controlled cleavage.
The polymer based blend furthermore may comprise all kinds of other fillers or additives, such as other elastomers, thermoplastic elastomers and/or thermoplastics and/or thermoset based polymer mixtures, or combinations thereof, or as recycled material, other recycled polymer based materials, fibres etc. Preferred are fillers or additives both supporting the heat resistance and secondary the crosslinking of the blend either by direct stabilization and/or by synergistic effects with the heat stabilizing and/or secondary crosslinking system, and/or fillers or additives supporting the high temperature crosslinking directly, such as carbon black, iron oxide, e.g. magnetite, vermiculite, perlite, aluminium oxide and hydroxide etc., or mixtures thereof.
The polymer based blend may comprise further additives such as flame retardants, biocides, plasticizers, stabilizers, colours etc., of any kind in any ratio, including additives for improving its manufacturing, application, aspect and performance properties, such as emulsifiers, softeners, inhibitors, retarders, accelerators, etc.; and/or additives for adapting it to the applications' needs, such as char-forming and/or intumescent additives, like expanding graphite and/or phosphorous compounds, to render the material self-intumescent and/or char-forming in case of fire to close and protect e.g. wall and bulkhead penetrations or to prevent accidents in case of pipe leakage; and/or internal adhesion promoters to ensure self-adhesive properties in co-extrusion and co-lamination applications, such as silicate esters, functional silanes, polyols, etc.
The polymer based blend is expanded to a mainly closed cell foam with a closed cell content of at least 70%. The blend is expanded to a density of less than 700 kg/m³, preferably less than 500 kg/m³, especially prefered less than 200 kg/m³. The expanded polymer blend shows a thermal conductivity to less than 0.2 W/mK at 0 °C, preferably to less than 0.08 W/mK at 0 °C.
Layer (A) may show a smooth, plain surface or ridge-like surface structure on one or both of its sides to act as a spacer for limiting heat transmission and for decoupling from sound, see fig. 2. The ridge-like structure may be of sinus like shape, or rectangular, or triangular, or trapezoidal, or a combination thereof.
Layer (A) will resist temperatures up to 600 °C without showing severe hardening or decomposition that would lead to brittleness and disintegration of the insulation material or system. This is achieved by a.m. heat induced downstream or subsequent crosslinking of the polymer part of (A) and/or the filler part of (A) by the secondary crosslinkers of (A). If only the polymers are crosslinked there will likely be occurrence of brittleness at an early stage of usage of the material. If only filler particles or molecules are crosslinked brittleness will occur later, but also be likely. In both cases the reason for probable brittleness can be found in active sites (mainly of the polymer) not being involved in the controlled crosslinking and thus showing danger of uncontrolled hardening. Highest stability versus high temperatures is achieved by connecting both the polymers' and fillers' active sites by crosslinkers. The crosslinkers here can act as bridging compound as in equation (1) and/or as initiators (i.e. not being integrated into the final structure) as in equation (2), see fig. 1b,

[P1]-Y + [P2]-Y + X-Crosslinker-X → [P1]-Crosslinker-[P2] +2 XY (1)

[P1 ]-Y + [P2]-Y + X-Crosslinker-X → [P1]-[P2] + YX-Crosslinker-XY (2)

where P1, P2 can be polymers and/or fillers, and X,Y are functional groups or active sites. (1) is typical for reactions of hydroxides and related compounds (chalkogen compounds in general), whereas (2) is typical for reactions with participation of halogens, see equations (1') and (2').

[P1]-OH + [P2]-OH + HO-B(R)-OH → [P1]-O-B(R)-O-[P2] +2 H₂O (1')

[P1]-Cl + [P2]-Cl + M → [P1]-[P2] + MCl₂ (2')

Reactions of type (1) or (2) can be combined to obtain firstly a controlled crosslinking and a stable final rigid structure and to secondly tailor-make the crosslinking system to the applications' temperature profile. The level of controlled self-hardening and the temperature level at which this reaction will start can be varied in a wide range by choosing the proper polymer/filler/crosslinker/accelerator combinations. Some of them are shown in table 1. As a general rule it can be stated that highest temperature resistance is linked to lowest total carbon content in the final ceramified or glassed layer (A) and is also related to the presence of silicon and/or aluminium atoms and their metal/oxygen and metal/hetero atom (e.g. boron, nitrogen) ratio. Due to the organic polymers being the major contributor to the total carbon content it is therefore favourable to choose such polymers for highest temperature applications showing non-carbon atoms in the polymer backbone itself (like in polyacetates, e.g. vinyl acetate, cellulose acetate; in polysiloxanes; in polyesters and polyethers/polyols; etc.) or having hetero atoms in the side chain (like in CR, CM, CSM, polyacetates and polyesters; etc.).
It is important in any case to carefully design the blend according to the final applications' temperature profile: the downstream crosslinking reaction has to be faster than the respective polymer decomposition velocity profile. Fig. 3 shows typical hardness/heat aging curves of polymer blends: hardening will accelerate disproportionately with rising temperature and finally lead to disintegration of the material, means, the material will become such brittle that it sooner or later breaks down under own weight or gravity. The major reason for this brittleness can be found in a very high level of uncontrolled and inhomogeneous crosslinking almost exclusively from carbon atoms to carbon atoms, which, together with the generally high carbon content, will finally lead to short chain polymer decomposition by-products and even carbon particles.
The bold curves in Figure 3 indicate how the claimed material will behave under the same conditions: it will become hard to the same level, but will not decompose or disintegrate but turn into rigid foam. This is due to the downstream crosslinking reaction firstly taking care of connecting carbon atoms to hetero atoms; secondly it is "absorbing" thermally cleaved bonds by integrating them into the homogeneously growing network; thirdly it is decreasing the total carbon content: carbon that will not be integrated into the network either will remain within the grid as an inactive filler without influence or will be oxidized to carbon dioxide and therefore be removed from the final blend. If the total carbon content in the final rigid foam is below 5% and the filler is mainly silicon based one can speak of a self-glassed material, else one should speak of a self-ceramified material. In general, one could speak about a self-rigidification effect.
As the general content of organics or combustibles is low to very low after self-rigidification the material of layer (A) then has to be judged as non-flammable/non combustible (see table 2).

The claimed material may comprise at least one layer (B) which can be applied as a protective layer between the hot surface and layer (A), see fig. 2. Layer (B) is only required if the hardening/ceramification balance of layer (A) would not be as desired, thus negatively disturbed by being shifted to the uncontrolled hardening side. Layer (B) may comprise temperature invariant materials, such as foamed glass, micro and nano scale inorganic particles in a matrix (e.g. silica gel like Aerogel®); fibres of glass, ceramics, minerals, carbon, aramide, imide etc., as tissue, fabric, mesh, woven or nonwoven; or any combination thereof.

The claimed material furthermore may comprise additional layers (C) providing additional insulation or diffusion barrier or protection properties or a combination thereof. Layers (C) may be applied underneath or on top of layers (A)-(B) or within the layers (A)-(B). Layers (C) can preferably be applied on the outer surface of the system for protection purposes, e.g. against weathering, UV, or mechanical impact. Layers (C) especially can be used to provide vibration damping and/or shock and/or impact absorbing functionality to prevent layer (A) from getting damaged after self-rigidification in case of mechanical load.

The claimed material furthermore may comprise additional parts (D) not being insulation material, e.g. plastics or metal work like pipes or tubes, such as corrugated metal pipe, or wires, sensors etc., that can directly be co-extruded on by the system (A)-(C) or that can be inserted into the insulation part after its manufacturing to form a pre-insulated system.

It is a prominent advantage of the claimed material that it is providing reliable and sustainable thermal insulation at temperatures rising up to 600 °C.

It is another advantage of the claimed material that it provides additional acoustic insulation.

Another basic advantage of the claimed material is the fact that it is flexible and easy to handle during mounting. It can easily be cut and shaped; therefore the insulation of elbows, valves, flanges etc. is particularly easy.

It is another advantage of the claimed material that it can be manufactured at temperatures up to 300 °C, mounted at temperatures from -10 to 400 °C, and only after these manipulations it will rigidify during use. The claimed material is therefore stable during storage.

It is another prominent advantage of the claimed material that the process of self-ceramification takes place in a rather short time at elevated, but not extreme temperatures, whereas known self-ceramifying materials (see e.g. EP 1006144, EP 1298161) or related char forming/intumescent materials (see e.g. EP 1733002) require very high temperatures (at least >650 °C), flame temperatures or even a direct flame contact. Those materials, however, do not ceramify at lower temperatures but disintegrate through heat aging, especially when they are foamed and/or mechanically loaded.

Materials ceramifying at lower temperatures need additional treatment, e.g. need to be ceramified under special conditions, like in the presence of ozone and water vapour (see DE 4035218) or in an ammonia atmosphere (like in EP 323103). Such additional treatment is advantageously not necessary in this invention.

It is another important advantage of the claimed material that its insulation properties are very constant over a wide temperature range, especially over the temperature range of the intended application (300-600 °C).

It is another advantage of the claimed material that it is not only high temperature resistant but also suitable for low temperature use, therefore ideal for outdoor purposes and for use under harsh conditions.

It is a further advantage of the claimed material that its composition will allow to use it indoors as well as outdoors, as weathering and UV stability is usually provided, as well as non toxic composition, and no odour is being formed. It is environmental friendly as it does not comprise or release harmful substances (e.g. phthalates are not needed as plasticizers, which are partially under discussion and partially prohibited), does not affect water or soil and as it can be blended or filled with or can contain scrapped or recycled material of the same kind to a very high extent not losing relevant properties significantly.

It is a linked advantage of the claimed material that it is fibre free and free of dust and therefore does not pollute air.

It is another advantage of the claimed material that it can be compressed during mounting and therefore, if mounted properly under said compression, will compensate shrinkage that usually occurs during self-rigidification due to volatiles and increase of network density.

It is a further advantage of the claimed material that it rigidifies, but still is able to bear tension, e.g. from thermal expansion/contraction during use.

It is a linked advantage of the material that it can withstand temperature fluctuations without mechanical damages like cracking, exfoliation, etc.

It is a further prominent advantage of the claimed material that even after self-rigidification it will maintain most of its closed cell content, thus, will show built-in vapour barrier properties and low thermal convection.

It is another advantage of the claimed material that it will not only provide thermal but also acoustic insulation for both airborne and body sound as it can be varied in its density and closed to open cell ratio to be adapted to the intended sound shielding profile.

A further advantage of the claimed material is the possibility to adapt also other than the acoustic properties to the desired property profile (concerning insulation, mechanical properties, temperature resistance etc.) by expanding it to an appropriate foam cell structure or density or by designing the proper blend or by applying appropriate layer combinations.

It is a prominent advantage of the claimed material that it can be produced in an economic way in a one-step mixing and a one-step shaping process, e.g. by moulding, extrusion and other shaping methods. It shows versatility in possibilities of manufacturing and application. It can be extruded, co-extruded, laminated, moulded, co-moulded etc. as single item or multilayer and thus it can be applied in almost unrestricted shaping.

It is a further advantage of the claimed material that it can be transformed and given shape by standard methods being widespread in the industry and that it does not require specialized equipment.

It is another advantage of the claimed material that it provides good high temperature insulation for reasonable economics.

A prominent advantage of the claimed material is the fact that it can be easily surface treated, e.g. coated, with various agents and by various means.

A further advantage of the claimed material is the fact that it is easily colourable, e.g. in red to indicate heat.

It is another important advantage of the claimed material that it can be pre-treated with energy to initiate the subsequent secondary crosslinking before mounting or other manipulations. The level of secondary crosslinking can be adjusted by temperature and duration of temperature treatment. This can be helpful for insulating large surfaces where more stiffness is desired or for doing performs, such as half shells, or for doing rigid final parts. This can e.g. be done after manufacturing in ovens, or on job site with heat guns of radiators.

A very prominent advantage of the claimed material is the fact that it will become inflammable or non combustible during and after self-rigidification which renders the claimed material ideal for applications in critical environment, e.g. in the oil/gas and chemical industry.

A further advantage is the use of the claimed material for applications requiring high temperature resistance at application temperatures >300 °C (continuous, intermediate or peak), such as for thermal solar pipe and tank insulation, industrial thermal and/or acoustic insulation, e.g. for high temperature fluid or steam pipe and tank or reactor insulation, for heating systems, e.g. burners or ovens, for indoor and/or outdoor purposes.

### Examples

### Example1 : Self-rigidifying blends and their behaviour when being exposed to high temperatures

Samples for testing were obtained by blending the respective base blend for A-F (see table 1) with a sulphur based vulcanisation system and with azodicarbonamide as expansion agent. The mixtures then were extruded, expanded and crosslinked to a 330 mm wide and 25 mm thick foam sheet.
The samples (approximately 300 x 200 mm) were cut out from the sheets and put on a Stuart® heating hotplate for tests up to 400 °C or on a gas burner heated plate for tests up to 600 °C, respectively.

Table 1 shows the blends/mixtures being used for comparative trials. The ceramification temperature range is according to the temperature range wherein the self-rigidification process takes place most efficiently. A stable rigid state is reached after some days at the respective temperature; the higher the temperature the faster the crosslinking. The service temperature is the maximum temperature recommended for final use, i.e. permanent heat load, if no more change of properties (e.g. no more shrinkage) is favoured.

**Table 1: Composition and respective service temperature range of typical self-rigidifying blends (all innovative examples)**

| | **Polymer base** | **Filler for cross-linking** | **Crosslinking system** | **Accelerator / support additive** | **Ceramification temperature** | **Service temperature** | **Rigid state reached after** |
|---|---|---|---|---|---|---|---|
| **A** | VMQ* | Silicate | Boric acid, sodium borate | Pyromellitic dianhydride | 300-600 °C | 500 °C | 2-5 days |
| **B** | VMQ* | ATH | Boric acid, sodium borate | - | 400-600 °C | 470 °C | 2-8 days |
| **C** | EPDM* | Silicate | Boric acid, sodium borate | - | 300-400 °C | 350 °C | 3-8 days |
| **D** | EPDM* | ATH | Pyrophosphate | Pyromellitic dianhydride | 300-500 °C | 380 °C | 2-4 days |
| **E** | CR* | Silicate | Pyrophosphate | Pyromellitic dianhydride, Mg(OH)₂ | 300-400 °C | 430°C | 2-4 days |
| **F** | CR* | ATH | Pyrophosphate | Pyromellitic dianhydride, Mg(OH)₂ | 300-400 °C | 400 °C | 2-5 days |

| | | | | | | | |
|---|---|---|---|---|---|---|---|
| *A and B: Armaprene® UHT; C and D: Armaprene® HT; E and F: Armaprene® BS2; all Armacell, Germany. | | | | | | | |

Used raw materials:
ATH: Martinal® 107, Martinswerk, Germany;
Boric acid, sodium borate and magnesium hydroxide Mg(OH)₂: Merck, Germany;
Pyrophosphate: sodium pyrophosphate, dibasic: SigmaAldrich, Germany;
Pyromellitic dianhydride: Lonza, Switzerland;
Silicate: Kieselguhr/Perlite, Lehmann&Voss, Germany.

### Example 2: Insulation and flame retardant properties

Samples of 25 mm thickness were prepared as in example 1. Density was tested by ISO 845; LOI by ISO 4589; thermal conductivity by EN 12667; flammability classification in accordance with EN 13501/EN 13823.

Table 2 shows some insulation related properties of selected blends from table 1 before and after self-rigidification in comparison to other materials being used for high temperature insulation.

**Table 2: High temperature insulation materials and their physical properties**

| | **A*** | **C*** | **E*** | **Foamed glass** | **Glass wool** | **Mineral wool** |
|---|---|---|---|---|---|---|
| **Density [kg/m³] after vulc.** | 85 | 78 | 79 | - | | - |
| **Density [kg/m³] in rigid state** | 96 | 76 | 73 | 120 | 63 | 130 |
| **LOI after vulc.** | 44 | 37 | 52 | - | - | - |
| **Thermal Conductivity at 0 °C [W/mK] after vulc.** | 0.041 | 0.039 | 0.040 | - | - | - |
| **Thermal Conductivity at 0 °C [Wm/K] in rigid state** | 0.044 | 0.038 | 0.039 | 0.040 | 0.039 | 0.034 |
| **Flammability classification after vulc.** | C S1 d0 | D S3 d0 | B S2 d0 | - | - | - |
| **Flammability classification in rigid state** | AS1 | B S1 d0 | AS1 | A S1** A S2*** | A S1** B S2*** | A S1** A S2*** |

| | | | | | | |
|---|---|---|---|---|---|---|
| *innovative example; **tested as stand-alone product; ***tested as system with mounting aids/covering/laminated layers as recommended and/or sold by manufacturers | | | | | | |

### Materials for comparative examples:

Foamed glass: Foamglas® ONE (1 inch = 25.4 mm thickness), Pittsburgh Coming, USA;
Glass wool: Isover®, Saint Gobain, France;
Mineral wool: Rockwool® Duraflex (30 mm thickness), Rockwool, Netherlands.

## Claims

1. A thermal and/or sound insulation material comprising at least one layer of an expanded, vulcanized organic polymer blend, wherein the polymer has hetero atoms in the polymer backbone and/or reactive side groups or sites and the polymer blend comprises at least one filler forming stable bonds and/or supporting crosslinking reactions at temperatures above 280°C and at least one crosslinker leading to a subsequent crosslinking during heat loading (permanent exposition to temperatures higher than 280°C), wherein that crosslinker is chemically active at a temperature higher than 280°C, thus leading to subsequent crosslinking.

2. The material according to claim 1, wherein the crosslinker is consisting of at least one compound chosen from the classes of initiators, bi-, tri- or tetrafunctional crosslinkers or any mixtures thereof , preferably tri- or tetrafunctional crosslinkers.

3. The material according to anyone of claims 1-2, wherein the polymer blend is expanded to a density of less than 700 kg/m³, preferably less than 500 kg/m³ according to ISO 845.

4. The material according to anyone of claims 1-3, wherein the expanded polymer blend is showing a thermal conductivity of less than 0.2 W/mK at 0 °C, preferably less than 0.08 W/mK at 0 °C according to EN 12667.

5. The material according to anyone of claims 1-4 wherein the closed cell content is at least 70%.

6. The material according to anyone of claims 1-5, which shows a controlled self-rigidification effect at temperatures >300 °C being faster than its respective heat aging leading to a self-glassed or self-ceramified, which means self-rigidified material.

7. The material according to anyone of claims 1-6, wherein the polymer is an elastomer or thermoplastic elastomer.

8. The material according to anyone of claims 1-7, wherein the subsequent crosslinking is based to more than 50% on condensation and/or polycondensation reaction mechanisms.

9. The material according to anyone of claims 1-8, wherein the filler is aluminium oxide and/or hydroxide and/or silicon oxide and/or hydroxide and/or alkyleneoxide based.

10. The material according to anyone of claims 1-9, wherein the secondary crosslinking system is based on boron and/or nitrogen and/or phosphorous and/or silicon compounds.

11. The material according to anyone of claims 1-10, wherein ridge structures are applied on one or both surfaces of the layer.

12. The material according to anyone of claims 1-11, wherein at least one protective layer is applied on the interior to prevent premature heat aging and/or mechanical damage.

13. The material according to anyone of claims 1-12, wherein at least one additional insulation and/or protection layer is applied on the exterior.

14. The material according to anyone of claims 1-13, wherein additional layers for protection, barrier and shielding purposes are applied on and/or underneath and/or in within other layers.

15. A process for manufacturing the material according to anyone of claims 1-14, in a moulding and/or continuous (co)extrusion and/or (co)lamination process.

16. The use of a material according to anyone of claims 1-14 for applications requiring high temperature resistance at application temperatures >300 °C (continuous, intermediate or peak),

17. The use of the material according to claim 16 for applications requiring high temperature resistance at application temperatures <600 °C (continuous, intermediate or peak).

## Patentansprüche

1. Wärme- und/oder Schallisoliermaterial, umfassend wenigstens eine Schicht eines geschäumten, vulkanisierten organischen Polymergemisches, wobei das Polymer im Polymergerüst Heteroatome und/oder reaktionsfähige Seitengruppen oder -stellen aufweist und das Polymergemisch wenigstens einen beständige Bindungen bildenden Füller und/oder unterstützende Vernetzungsreaktionen bei Temperaturen von über 280 °C und wenigstens einen Vernetzer umfasst, der zu einer nachfolgenden Vernetzung während der Wärmebeaufschlagung (konstante Einwirkung von Temperaturen von über 280 °C) führt, wobei der Vernetzer bei einer Temperatur von über 280 °C chemisch aktiv ist, was zur nachfolgenden Vernetzung führt.

2. Material nach Anspruch 1, wobei der Vernetzer aus wenigstens einer Verbindung, ausgewählt aus den Klassen von Initiatoren, bi-, tri- oder tetrafunktionellen Vernetzern oder Gemischen davon, vorzugsweise tri- oder tetrafunktionellen Vernetzern, besteht.

3. Material nach einem der Ansprüche 1 - 2, wobei das Polymergemisch bis zu einer Dichte von unter 700 kg/m³, vorzugsweise von weniger als 500 kg/m³ gemäß ISO 845, geschäumt ist.

4. Material nach einem der Ansprüche 1 - 3, wobei das geschäumte Polymergemisch eine Wärmeleitfähigkeit von unter 0,2 W/mK bei 0 °C, vorzugsweise von unter 0,08 W/mK bei 0 °C gemäß EN 12667, aufweist.

5. Material nach einem der Ansprüche 1 - 4, wobei der Gehalt an geschlossenen Zellen wenigstens 70 % beträgt.

6. Material nach einem der Ansprüche 1 - 5, das bei Temperaturen > 300 °C eine Selbstversteifungswirkung zeigt, die schneller eintritt als die entsprechende Wärmealterung, was zu einem selbstverglasten bzw. selbstkeramisierten, d.h. zu einem selbstverseiften Material führt.

7. Material nach einem der Ansprüche 1 - 6, wobei das Polymer ein Elastomer oder ein thermoplastisches Elastomer ist.

8. Material nach einem der Ansprüche 1 - 7, wobei die nachfolgende Vernetzung zu mehr als 50 % auf Kondensations- und/oder Polykondensationsreaktionsmechanismen beruht.

9. Material nach einem der Ansprüche 1 - 8, wobei der Füller auf Aluminiumoxid und/oder - hydroxid und/oder Siliciumoxid und/oder -hydroxid und/oder Alkylenoxid beruht.

10. Material nach einem der Ansprüche 1 - 9, wobei das sekundäre Vernetzungssystem auf Bor- und/oder Stickstoff- und/oder Phosphor- und/oder Silicumverbindungen beruht.

11. Material nach einem der Ansprüche 1 - 10, wobei die Rippenstrukturen auf eine oder beide Oberflächen der Schicht aufgebracht werden.

12. Material nach einem der Ansprüche 1 - 11, wobei wenigstens eine Schutzschicht auf das Innere aufgebracht wird, um eine vorzeitige Wärmealterung und/oder mechanische Schädigung zu verhindern.

13. Material nach einem der Ansprüche 1 - 12, wobei wenigstens eine zusätzliche Isolier- und/oder Schutzschicht auf die Außenfläche aufgebracht ist.

14. Material nach einem der Ansprüche 1 - 13, wobei zusätzliche Schichten für Schutz-, Sperr- und Abschirmzwecke auf und/oder unter und/oder innerhalb weiterer Schichten aufgebracht werden.

15. Verfahren zur Herstellung des Materials nach einem der Ansprüche 1- 14, in einem Form- und/oder kontinuierlichen (Co)Extrusions- und/oder (Co)Laminierungsprozess.

16. Verwendung eines Materials nach einem der Ansprüche 1- 14 für Zwecke, die eine hohe Temperaturbeständigkeit bei Beschichtungstemperaturen von > 300 °C (kontinuierlich, zwischenzeitlich, im Spitzenwert) erfordern.

17. Verwendung eines Materials nach Anspruch 16 für Zwecke, die eine hohe Temperaturbeständigkeit bei Beschichtungstemperaturen von < 600 °C (kontinuierlich, zwischenzeitlich, im Spitzenwert) erfordern.

## Revendications

1. Matériau d'isolation thermique et/ou phonique comprenant au moins une couche d'un mélange polymère organique vulcanisé expansé, dans lequel le polymère comporte des hétéroatomes dans le squelette polymère et/ou des sites ou groupes latéraux réactifs et le mélange polymère comprend au moins une charge formant des liaisons stables et/ou supportant des réactions de réticulation à des températures supérieures à 280 °C et au moins un agent réticulant entraînant une post-réticulation sous l'action de la chaleur (exposition permanente à des températures supérieures à 280 °C), cet agent réticulant étant chimiquement actif à une température supérieure à 280 °C, entraînant ainsi une post-réticulation.

2. Matériau selon la revendication 1, dans lequel l'agent réticulant est constitué d'au moins un composé choisi parmi les différentes classes d'initiateurs, d'agents réticulants bi-, tri- ou tétrafonctionnels ou de n'importe quels mélanges de ceux-ci, de préférence les agents réticulants tri- ou tétrafonctionnels.

3. Matériau selon l'une quelconque des revendications 1-2, dans lequel le mélange polymère est expansé à une masse volumique inférieure à 700 kg/m³, de préférence inférieure à 500 kg/m³ conformément à l'ISO 845.

4. Matériau selon l'une quelconque des revendications 1-3, dans lequel le mélange polymère expansé présente une conductivité thermique inférieure à 0,2 W/mK à 0°C, de préférence inférieure à 0,08 W/mK à 0 °C conformément à l'EN 12667.

5. Matériau selon l'une quelconque des revendications 1-4, dans lequel la teneur en cellules fermées est d'au moins 70 %.

6. Matériau selon l'une quelconque des revendications 1-5, qui présente un effet d'auto-rigidification aux températures >300 °C plus rapide que son vieillissement thermique correspondant, conduisant à un matériau auto-vitrifié ou auto-converti en céramique, ce qui veut dire un matériau auto-rigidifié.

7. Matériau selon l'une quelconque des revendications 1-6, dans lequel le polymère est un élastomère ou un élastomère thermoplastique.

8. Matériau selon l'une quelconque des revendications 1-7, dans lequel la post-réticulation est basée à plus de 50 % sur des mécanismes de condensation et/ou de polycondensation.

9. Matériau selon l'une quelconque des revendications 1-8, dans lequel la charge est à base d'oxyde et/ou hydroxyde d'aluminium et/ou d'oxyde et/ou hydroxyde de silicium et/ou d'oxyde d'alkylène.

10. Matériau selon l'une quelconque des revendications 1-9, dans lequel le système de réticulation secondaire est basé sur des composés de bore et/ou d'azote et/ou de phosphore et/ou de silicium.

11. Matériau selon l'une quelconque des revendications 1-10, dans lequel des structures à nervure sont appliquées sur une surface ou sur les deux surfaces de la couche.

12. Matériau selon l'une quelconque des revendications 1-11, dans lequel au moins une couche protectrice est appliquée sur l'intérieur pour éviter un vieillissement thermique prématuré et/ou des dommages mécaniques.

13. Matériau selon l'une quelconque des revendications 1-12, dans lequel au moins une couche supplémentaire d'isolation et/ou de protection est appliquée sur l'extérieur.

14. Matériau selon l'une quelconque des revendications 1-13, dans lequel des couches supplémentaires destinées à servir de protection, de barrière et d'écran sont appliquées sur et/ou sous et/ou à l'intérieur d'autres couches.

15. Procédé de fabrication du matériau selon l'une quelconque des revendications 1-14, dans un procédé de (co)laminage et/ou (co)extrusion continu et/ou de moulage.

16. Utilisation d'un matériau selon l'une quelconque des revendications 1-14 pour des applications nécessitant une résistance élevée à la température à des températures d'application >300 °C (continues, moyennes, ou maximales).

17. Utilisation du matériau selon la revendication 16 pour des applications nécessitant une résistance élevée à la température à des températures d'application <600 °C (continues, moyennes, ou maximales).
